# NEUE EUROPÄISCHE PATENTSCHRIFT

(11) **EP 2 450 298 B2**
(45) Veröffentlichungstag und Bekanntmachung des Hinweises auf die Entscheidung über den Einspruch: **24.01.2018**
(45) Hinweis auf die Patenterteilung: 31.12.2014
(21) Anmeldenummer: 11184679.6
(22) Anmeldetag: 11.10.2011
(51) Int. Cl.: B65G 1/137, B65G 57/03, B65G 59/02

(54) **Manuelles Verfahren und Vorrichtung zum Beladen eines Ladungsträgers mit Artikeln**
Manual method and device for loading a load carrier with items
Procédé et dispositif manuel pour déposer des articles sur un support de charge

(30) Priorität: 03.11.2010 DE 102010060327
(43) Veröffentlichungstag der Anmeldung: 09.05.2012
(73) Patentinhaber: Dematic GmbH, 63150 Heusenstamm (DE)
(72) Erfinder: Stehr, Peter, 63179 Oberhausen (DE); Stötzner, Matthias, 63500 Seligenstadt (DE)
(74) Vertreter: Moser Götze & Partner Patentanwälte mbB

(56) Entgegenhaltungen:
- EP-A2- 1 462 394
- WO-A1-2009/109218
- DE-A1-102008 026 326
- DE-A1-102008 055 704
- DE-U1-202009 009 773

## Beschreibung

Die Erfindung betrifft ein manuelles Verfahren zum Beladen eines Ladungsträgers mit Artikeln bzw. Ladungseinheiten in einer Kommissionierstation, in dem zu kommissionierende Artikel auf Tablaren liegend zu einem Kommissionierplatz für einen Kommissionierer zum Beladen eines Ladungsträgers bzw. eines sich auf dem Ladungsträger bildenden Stapels und mit einem ortsfesten Kommissioniertisch zum Verschieben der Artikel vor dem Beladen gefördert werden, wobei der zu beladende Ladungsträger neben und unterhalb des Kommissioniertisches angeordnet ist, und eine entsprechende Vorrichtung.

Zur Vereinfachung wird nachfolgend lediglich der Begriff Artikel verwendet, wobei klar ist, dass darunter neben einzelnen Artikeln auch Verpackungseinheiten von mehreren Artikeln, oft als Kollies bezeichnet, usw. verstanden werden.

Artikel deren Abmessungen (allgemein Eigenschaften) sehr inhomogen oder variierend sind bzw. deren Transport schwer zu automatisieren ist, werden oft auf sogenannten Tablaren, Trays etc. gelagert und transportiert. Damit die Artikel während des so möglichen schonenden Transports nicht vom Tablar rutschen, weisen diese immer einen erhöhten aber niedrigen Rand auf.

Um die Güter später zu kommissionieren oder auf Paletten usw. zu packen, müssen sie vom Tablar getrennt bzw. vereinzelt werden.

Um Güter vom Tablar zu trennen, gibt es je nach Bauweise der Tablare unterschiedliche Möglichkeiten. Dies kann im einfachsten Fall durch manuelles Herausheben über einen starren Rand eines einteiligen Tablars vorgenommen werden.

Alternativ gibt es Tablare mit Löchern in dem Boden, so dass die Güter von unten durch Hubstifte angehoben werden können. In ähnlicher Weise gibt es zweiteilige Tablare, die einen eingelegten und hebbaren Boden haben, der von unten durch Ausnehmungen in dem Rahmen zusammen mit den darauf befindlichen Gütern anhebbar ist.

Somit ist entweder eine Tablar-Entladungsstation oder ein manuelles Herausheben der Artikel aus bzw. von dem Tablar notwendig.

Von der Dematic GmbH, Offenbach Deutschland, ist eine manuelle Packstation ErgoPall ® zum Bestapeln von Paletten, Rollwagen usw. bekannt. Dabei werden auf Rollbahnen angeförderte Kisten, Kartons, Behälter, Verpackungseinheit etc. von einem Bediener auf die entsprechende Palette usw. abgelegt, um eine Lage auszubilden. Sobald eine Lage vollständig belegt bzw. bestapelt ist, wird nach manueller Auslösung die in einem Schacht befindliche Palette um die Höhe einer Lage abgesenkt, so dass der Bediener nun eine neue Lage stapeln kann. Dabei wird der abgesenkte Bereich des sich bildenden Stapels durch eine unterhalb der Bestückungsebene angeordnete Folienwickelmaschine eingewickelt. Bei dieser Palettierstation werden die zu palettierenden Behälter auf Rollenbahnen angefördert. Zur Arbeitserleichterung sind die Rollbahnen auf Höhe des Schachtrandes angeordnet, so dass die Behälter von dem Bediener einfach von der Rollenbahn abgeschoben werden können. Um deren Platzierung innerhalb des Schachts bzw. der sich bildenden Lage zu erleichtern, ist der Schachtrand mit einem als Gleittisch dienenden verbreiterten Rand ausgestaltet. Somit kann der jeweilige Behälter usw. auf dem Rand gleitend an die gewünschte Position am Rand bewegt werden und muss nur für den letzten Wegabschnitt von Bediener gehalten und bewegt werden. Dies erlaubt eine besonders schonende Arbeitsweise.

Allerdings können die Artikel bei dieser Art der Pack- oder Kommissionierstation nicht auf Tablaren angeleifert werden, sondern die Artikel müssen (wie oben beschrieben) in einer vorgelagerten Station von den Tablaren getrennt bzw. diesen entladen werden.

Ein entsprechendes Verfahren ist auch aus der WO 2009/109218 A1 bekannt.

Aus der europäischen Offenlegungsschrift EP 1 462 394 A2 ist ein vollautomatisches Verfahren zum Beladen eines Ladungsträgers mit Artikeln bekannt, bei dem die Artikel auf Tablaren einer vollautomatischen Kommissionierstation zugeführt und von dieser ohne menschliche Interaktion auf dem Ladungsträger gestapelt werden.

Demgegenüber besteht die Aufgabe der vorliegenden Erfindung darin, ein manuelles Verfahren zu schaffen, bei dem die Artikel durchgängig vom Artikeleingang bis hin zum Artikelausgang (bzw. Kommissionierstation) auf Tablaren gelagert und gefördert werden können, so dass ein getrenntes Entladen der Tablare entfallen kann. Dabei soll das Verfahren eine ergonomische Kommissionierung erlauben.

Diese Aufgabe wird durch das in Anspruch 1 wiedergegebene manuelle Verfahren gelöst.

Dadurch, dass ein Absenken eines Rahmens des Tablars derart in der Kommissionierstation erfolgt, dass diese ohne manuelles Heben von dem Tablar auf den Kommissioniertisch durch den Kommissionierer abgeschoben werden können, um die Artikel anschließend ohne Heben auf dem Ladungsträger bzw. dem sich auf dem Ladungsträger bildenden Stapel zu positionieren, können einerseits die Artikel durchgängig im gesamten Logistikprozess auf den Tablaren verbleiben, d.h. vom Artikeleingang (z.B. Depalletierung) bis hin zum Artikelausgang (Kommissionierung) und andererseits auf eine getrennte Entladung der Tablare verzichtet werden.

Die Artikel werden also direkt ohne vorherige Entladung auf den Tablaren liegend der Kommissionierstation bzw. dem Kommissionierplatz zugeführt und dort so bereitgestellt, dass der Kommissionierer den jeweiligen Artikel vom Tablar auf den Kommissioniertisch schieben kann, ohne dass eine anstrengendes unergonomisches Anheben erfolgen muss. Anschließend kann der Kommissionierer den Ladungsträger, also eine Palette, einen Rollwagen, eine Kiste etc. mit dem Artikel versehen, wozu er den Artikel wiederum nicht Anheben muss, sondern ihn über den Rand des Kommissioniertisches auf den Ladungsträger bzw. auf den sich darauf bildenden Stapel abschieben kann. Somit erfolgt der gesamte Kommissioniervorgang ohne den bisher üblichen Hebevorgang.

Erfindungsgemäß wird der Rand des etwa auf Höhe des Kommissioniertisches befindlichen Tablars abgesenkt, um ein Abschieben zu ermöglichen. In einer nicht erfindungsgemässen Variante wird also der Artikel auf dem Tablar bzw. Tablarboden aktiv angehoben, während in der erfindungsgemässen Variante der Rahmen abgesenkt wird, also der Artikel quasi passiv zum Abschieben durch "Entfernen" des Randes freigeben wird.

Sinnvoll ist es in der nicht erfindungsgemässen Variante zudem, wenn die Artikel auf dem Tablar von unten auf eine Höhe angehoben werden, die geringfügig höher als die Höhe des Kommissioniertisches ist, so dass neben der Überwindung des Tablarrands auch das Niveau des Kommissioniertisches erreicht wird.

Vorzugsweise sind diese beiden Höhen bzw. Niveaus aufeinander abgestimmt bzw. identisch.

In der erfindungsgemässen Variante ist es entsprechend sinnvoll, wenn die Anförderung der Tablare auf einer Höhe erfolgt, die geringfügig höher als die Höhe des Kommissioniertisches ist, und der Rahmen der Tablare auf eine Höhe abgesenkt wird, die geringfügig niedriger als die Höhe einer Bodenplatte des Tablars ist.

Ebenfalls bevorzugt ist es, wenn die Höhe des Ladungsträgers bzw. des sich auf dem Ladungsträger bildenden Stapels unterhalb des Niveaus des Kommissioniertisches liegt, so dass der Kommissionier auf bei diesem Schritt keine Hebetätigkeit ausführen muss.

Dabei ist es zudem sinnvoll, wenn das Niveau des Ladungsträgers bzw. des sich auf dem Ladungsträger bildenden Stapels unterhalb des Niveaus des Kommissioniertisches bis zum Ende des Beladungsvorgangs konstant gehalten wird, vorzugsweise knapp unterhalb des Rands des Kommissioniertisches, so dass der Kommissionierer immer den gleichen Abstand überwinden muss bzw. den Artikel einfach auf den Ladungsträger bzw. den sich darauf bildenden Stapel durch abschieben ablegen kann.

Eine besonders einfache und ergonomische Möglichkeit die Artikel innerhalb der Ebene auf dem Ladungsträger bzw. Stapel zu positionieren ergibt sich, wenn der Kommissioniertisch schachtartig mit einem verbreiterten umlaufenden Rand ausgebildet ist und der Ladungsträger bzw. der sich auf dem Ladungsträger bildende Stapel innerhalb des Schachts angeordnet ist. Dann kann der Kommissionierer den Artikel auf dem Rand des Kommissioniertisches an die gewünschte Position bzgl. des Ladungsträgers bzw. des Stapels schieben und anschließend abschieben, ohne das ein Heben benötigt wird.

Die Erfindung betrifft ebenfalls eine entsprechend ausgestaltete manuelle Kommissionierstation, in der die Kommissionierstation ausgestaltet ist, um ein Bereitstellen der Artikel auf dem Tablar auf eine Höhe derart zu ermöglichen, dass diese ohne manuelles Heben von dem Tablar auf den Kommissioniertisch durch den Kommissionierer abgeschoben werden können, um die Artikel anschließend ohne Heben auf dem Ladungsträger bzw. dem sich auf dem Ladungsträger bildenden Stapel zu positionieren.

Die Artikel werden also auf dem Tablar bzw. dessen falschem Boden liegend in der Kommissionierstation am Ende des Förderers von unten angehoben auf ein Niveau, das ein Abschieben ohne Heben erlaubt. Dazu können Hubstifte verwendet werden, wenn die Tablare gelocht sind, oder ähnliche Mechanismen zum Anheben des falschen Bodens. Erfindungsgemäss wird bei einem zweiteiligen Tablar analog der DE 10 2008 026 326 A1 ein Absenken des Rahmens erfolgen, wie dies analog aus der DE 10 2008 055 704 A1 bekannt ist.

Die Kommissionierstation umfasst also in einer bevorzugten Variante eine Absenkvorrichtung, die lediglich den konstruktiv leichten Rahmen eines Tablars bewegt, ohne eine vertikale Bewegung der innen liegenden, beladenen Transportplatte zu bewirken, ist es möglich, die auf der vom Rahmen separaten Transportplatte liegenden Artikel auf gleichbleibendem Niveau durch das System zu bewegen. Dies erlaubt eine hohe Bearbeitungsgeschwindigkeit bei geringer Geräuschentwicklung. Ferner können nun auch schwere Artikel transportiert und zuverlässig entladen werden, da diese nicht in der Vertikalen bewegt werden müssen Lediglich der den Artikel sichernde Rahmen des Tablars wird bedarfsgerecht abgesenkt.

Die Kommissionierstation umfasst entsprechend in einer anderen nicht erfindungsgemässen Variante dagegen eine Hubvorrichtung, die lediglich zum Anheben einer Bodenplatte des Tablars bzw. der Artikel ausgestaltet ist.

Weitere Einzelheiten, Merkmale und Vorteile ergeben sich aus der nachfolgenden Beschreibung eines Ausführungsbeispiels anhand der Zeichnung. Es zeigen:

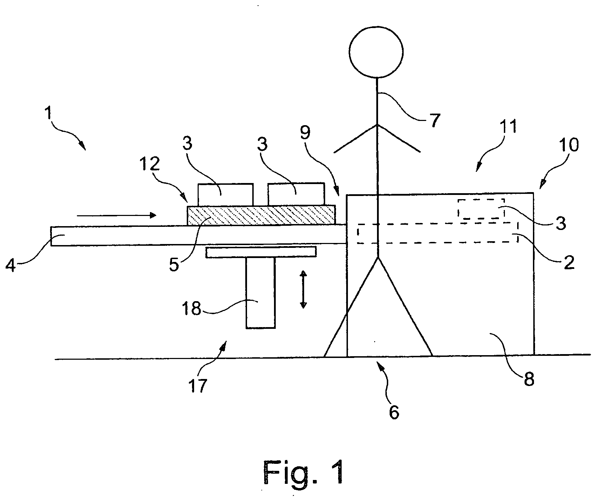

Fig. 1 eine schematische Seitenansicht einer Kommissionierstation beim Anfördern eines mit Artikeln bestückten Tablars;

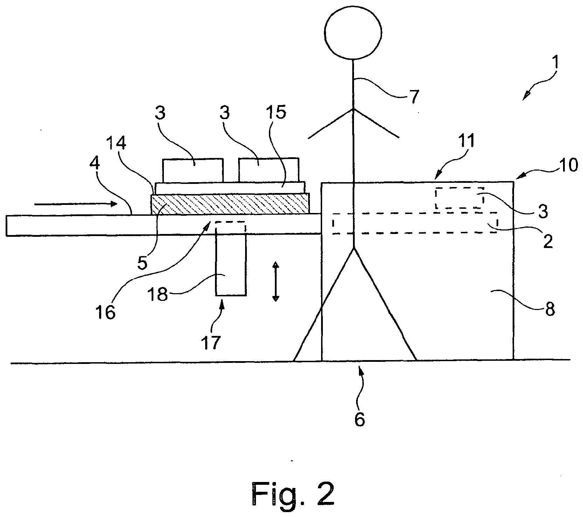

Fig. 2 eine schematische Seitenansicht der Kommissionierstation aus Figur 1 beim Anheben der Artikel und

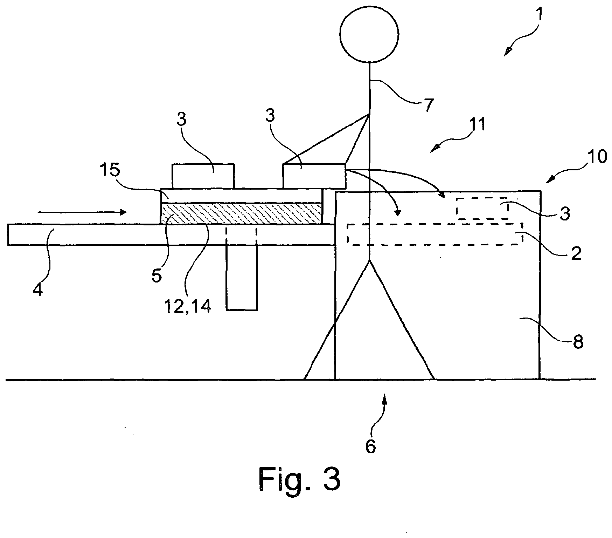

Fig. 3 eine schematische Seitenansicht der Kommissionierstation aus Figur 1 beim Abschieben der Artikel sowie
Fig. 4 eine schematische Draufsicht auf Figur 3.

In den Figuren ist eine als Ganzes mit 1 bezeichnete manuelle Kommissionierstation zum Beladen einer Palette 2 als Ladungsträgers mit Artikeln 3 unterschiedlichen Ausmaßes und Inhalts dargestellt.

Die Kommissionierstation 1 umfasst einen Rollenförderer 4 zum Anfördern von Tablaren 5 aus einem nicht dargestellten Lagersystem, zu einem Kommissionierplatz 6 für den Kommissionierer 7 zum Beladen des Ladungsträgers 2 bzw. eines sich auf dem Ladungsträger 2 bildenden Stapels.

Die Kommissionierstation 1 umfasst ferner einen ortsfesten Kommissioniertisch 8 zum Verschieben der Artikel 3 vor dem Beladen am Kommissionierplatz 6. Der Kommissioniertisch 8 ist dabei so zum Förderer 4 angeordnet, dass die Tablare 5 direkt zum Kommissioniertisch 8 gefördert werden und an dessen Stirnseite 9 angedient werden.

Der Kommissioniertisch 8 ist im vorliegenden Beispiel schachtartig ausgebildet, d.h. er umfasst einen verbreiterten umlaufenden Rand 10 um eine zentrale Öffnung 11, in der der Ladungsträger bzw. die Palette 2 innerhalb des Schachts angeordnet ist. Dann kann der Kommissionierer 7 den Artikel 3 auf dem Rand 10 des Kommissioniertisches 8 an die gewünschte Position bzgl. des Ladungsträgers bzw. des Stapels schieben und anschließend abschieben, ohne das ein Heben benötigt wird.

Die Palette 2 ist innerhalb des Schachts in der Höhe variabel gehalten. Sie wird zunächst nahe des Schachtrandes 10 angeordnet. Sobald eine Schicht mit Artikeln 3 ausgebildet ist, wird die Palette um eine durchschnittliche Schichthöhe im Schacht nach unten gefahren, so dass das obere Niveau des sich durch das Kommissionieren bildenden Stapels etwa an derselben Stelle bleibt.

Der eigentliche Kommissioniertisch wird also durch den verbreiterten Rand 10 ausgebildet, der als Schiebefläche dient, und der zu beladende Ladungsträger ist neben und unterhalb des Randes angeordnet.

Die Tablare 5 sind zweiteilig ausgeführt, d.h. sie weisen einen Rahmen 12 mit einem Boden 13 und mit einem umlaufenden erhöhten Rand 14 sowie eine separate Bodenplatte 15 auf, die im Rahmen 12 innerhalb des Randes 14 angeordnet und unverlierbar beweglich ist.

Des Weiteren weist der Rahmen 12 unten eine zentrale Öffnung 16 im Boden 13 für den Ein- und Durchgriff eines Bodenplattenhuborgans 18 einer Hubvorrichtung 17 auf.

Somit ist die Kommissionierstation 1 ausgestaltet, um ein Bereitstellen der Artikel 3 auf dem Tablar 5 auf einer Höhe derart zu ermöglichen, dass diese ohne Heben manuell von dem Tablar 5 auf den Rand 10 des Kommissioniertisches 8 durch den Kommissionierer 7 abgeschoben werden können.

Die Artikel 3 werden also auf der Bodenplatte 15 des Tablars 5 liegend von unten her von dem Bodenplattenhuborgan 18 auf etwa auf das Niveau (bzw. geringfügig höher) des Rands 10 angehoben und der Kommissionierer 7 kann die Artikel 3 barrierefrei von dem Tablar 5 abschieben bzw. abziehen etc.

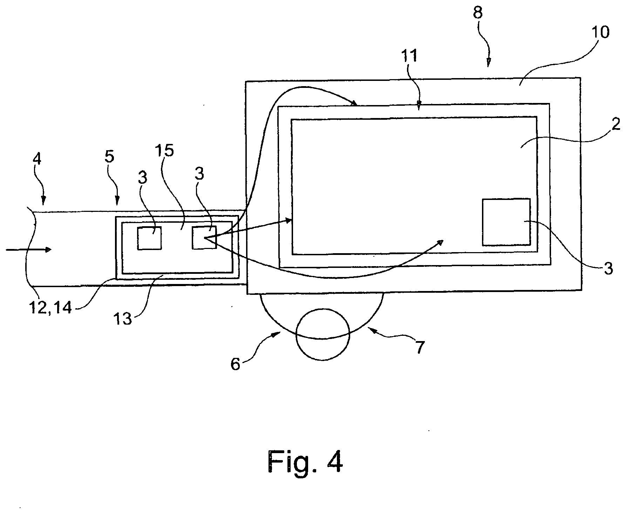

Dann kann der Kommissionierer 7 den jeweiligen Artikel 3 auf dem Rand 10 des Kommissioniertisches 8 an die gewünschte Position bzgl. der Palette 2 bzw. des Stapels schieben (angedeutet durch Pfeile in Figur 4) und anschließend auf den Stapel abschieben, ohne das ein Heben benötigt wird.

Es versteht sich, dass die Tablare 5 bzw. Artikel 3 computerunterstützt zum Abarbeiten eines Auftrags in einer optimierten Reihenfolge aus dem Lagersystem über den Förderer 4 angedient werden.

### Bezugszeichenliste

- 1: Kommissionierstation
- 2: Palette
- 3: Artikel
- 4: Rollenförderer
- 5: Tablar
- 6: Kommissionierplatz
- 7: Kommissionierer
- 8: Kommissioniertisch
- 9: Stirnseite
- 10: Rand
- 11: Öffnung
- 12: Rahmen
- 13: Boden
- 14: Rand
- 15: Bodenplatte
- 16: Öffnung
- 17: Hubvorrichtung
- 18: Bodenplattenhuborgan

## Patentansprüche

1. Manuelles Verfahren zum Beladen eines Ladungsträgers (2) mit Artikeln (3) bzw. Ladungseinheiten in einer Kommissionierstation (1), in dem zu kommissionierende Artikel (3) auf Tablaren (5) liegend zu einem Kommissionierplatz (6) für einen Kommissionierer (7) zum Beladen eines Ladungsträgers (2) bzw. eines sich auf dem Ladungsträger bildenden Stapels und mit einem ortsfesten Kommissioniertisch (8) zum Verschieben der Artikel (3) vor dem Beladen gefördert werden, wobei der zu beladende Ladungsträger (2) neben und unterhalb des Kommissioniertisches (8) angeordnet ist,
**dadurch gekennzeichnet, dass**
ein Absenken eines Rahmens (12) des Tablars (5) derart in der Kommissionierstation (1) erfolgt, dass die Artikel (3) ohne manuelles Heben von dem Tablar (5) auf den Kommissioniertisch (8) durch den Kommissionierer (7) abgeschoben werden können, um die Artikel (3) anschließend ohne Heben auf dem Ladungsträger (2) bzw. dem sich auf dem Ladungsträger bildenden Stapel zu positionieren.

2. Verfahren nach Anspruch 1, **dadurch gekennzeichnet, dass** die Anförderung der Tablare (5) auf einer Höhe erfolgt, die geringfügig höher als die Höhe des Kommissioniertisches (8) ist, und der Rahmen (12) der Tablare auf eine Höhe abgesenkt wird, die geringfügig niedriger als die Höhe einer Bodenplatte (13) des Tablars (5) ist.

3. Verfahren nach einem der vorhergehenden Ansprüche, **dadurch gekennzeichnet, dass** die Höhe des Ladungsträgers (2) bzw. des sich auf dem Ladungsträger bildenden Stapels unterhalb des Niveaus des Kommissioniertisches (8) liegt.

4. Verfahren nach Anspruch 3, **dadurch gekennzeichnet, dass** das Niveau des Ladungsträgers (2) bzw. des sich auf dem Ladungsträger bildenden Stapels unterhalb des Niveaus des Kommissioniertisches (8) bis zum Ende des Beladungsvorgangs konstant gehalten wird.

5. Verfahren nach einem der vorhergehenden Ansprüche, **dadurch gekennzeichnet, dass** der Kommissioniertisch schachtartig mit einem verbreiterten umlaufenden Rand (10) ausgebildet ist und der Ladungsträger (2) bzw. der sich auf dem Ladungsträger bildende Stapel innerhalb des Schachts angeordnet ist.

6. Manuelle Kommissionierstation (1) zum Beladen eines Ladungsträgers (2) mit Artikeln (3) bzw. Ladungseinheiten mit einer Fördereinrichtung (4) zum Anfördern von zu kommissionierenden und auf Tablaren (5) liegenden Artikeln (3), mit einem Kommissionierplatz (6) für den Kommissionierer (7) zum Beladen des Ladungsträgers (2) bzw. eines sich auf dem Ladungsträger bildenden Stapels und mit einem ortsfesten Kommissioniertisch (8) zum Verschieben der Artikel (3) vor dem Beladen, wobei der zu beladende Ladungsträger (2) neben und unterhalb des Kommissioniertisches (8) angeordnet ist,
**dadurch gekennzeichnet, dass**
die Kommissionierstation (1) ausgestaltet ist, um ein Bereitstellen der Artikel (3) auf dem Tablar (5) auf eine Höhe derart zu ermöglichen, dass diese ohne manuelles Heben von dem Tablar (5) auf den Kommissioniertisch (8) durch den Kommissionierer (7) abgeschoben werden können, um die Artikel (3) anschließend ohne Heben auf dem Ladungsträger (2) bzw. dem sich auf dem Ladungsträger bildenden Stapel zu positionieren, und diese eine Absenkvorrichtung umfasst, die lediglich zum Absenken eines Rahmens (12) eines Tablars (5) ohne vertikale Bewegung einer Bodenplatte (15) des Tablars (5) ausgestaltet ist.

## Claims

1. A manual method of loading a load carrier (2) with articles (3) or load units in an order selection station (1), in which articles (3) to be selected are conveyed resting on trays (5) to an order selection location (6) for a selector (7) for loading a load carrier (2) or a stack forming on the load carrier and with a fixed selection table (8) for sliding the articles (3) before loading, wherein the load carrier (2) to be loaded is arranged adjacent to and below the selection table (8), **characterised in that** lowering of a frame (12) of the tray (5) in the order selection station (1) occurs such that the articles can be pushed by the selector (7) without manually lifting them from the tray (5) onto the selection table (8) in order to position the articles subsequently without lifting on the load carrier (2) or the stack forming on the load carrier.

2. A method as claimed in claim 1, **characterised in that** the conveying of the trays occurs to a height which is slightly higher than the height of the selection table (8) and the frame (12) of the trays is lowered to a height, which is slightly lower than the height of a base plate (13) of the tray (5).

3. A method as claimed in one of the preceding claims, **characterised in that** the height of the load carrier (12) or of the stack forming on the load carrier is below the level of the selection table (8).

4. A method as claimed in claim 3, **characterised in that** the level of the load carrier (2) or of the stack forming on the load carrier is maintained constant below the level of the selection table (8) up to the end of the loading process.

5. A method as claimed in one of the preceding claims, **characterised in that** the selection table is constructed in the manner of a chamber with a broadened peripheral edge (10) and the load carrier (2) or the stack forming on the load carrier is arranged within the chamber.

6. A manual order selection station (1) for loading a load carrier (2) with articles (3) or load units including a conveying device (4) for conveying articles (3), which are to be selected and are resting on trays (5), a selection location (6) for the selector (7) for loading the load carrier (2) or a stack forming on the load carrier and a fixed selection table (8) for displacing the articles (3) before loading, wherein the load carrier to be loaded is arranged adjacent and below the selection table (8), **characterised in that** the order selection station (1) is constructed in order to enable provision of the articles (3) on the tray (5) at a height such that they can be pushed off from the tray (5) onto the selection table (8) by the selector without manual lifting in order subsequently to position the articles (3) without lifting on the load carrier (2) or the stack forming on the load carrier, and it includes a lowering device only to lower a frame (12) of a tray (5) without vertical movement of a base plate (15) of the tray (5).

## Revendications

1. Procédé manuel de chargement d'un support de charges (2) avec des articles (3) ou des unités de charges dans une station de préparation de commandes (1), procédé dans lequel des articles (3) à préparer se trouvant sur des plateaux (5) sont amenés à un poste de préparation de commandes (6) qui est destiné à un préparateur de commandes (7), dont le rôle est de charger un support de charges (2) ou une pile en formation sur le support de charges, et qui comporte une table de préparation de commandes fixe (8) destinée à déplacer les articles (3) avant le chargement, le support de charges (2) à charger étant disposé à côté et au-dessous de la table de préparation de commandes (8),
**caractérisé en ce que**
un abaissement d'un cadre (12) du plateau (5) peut être effectué dans le poste de préparation de commandes (1) de telle manière que le préparateur de commandes (7) peut pousser les articles (3), sans avoir à les soulever manuellement, du plateau (5) sur la table de préparation de commandes (8) afin de positionner ensuite les articles (3), sans les soulever, sur le support de charges (2) ou sur la pile en formation sur le support de charges.

2. Procédé selon la revendication 1, **caractérisé en ce que** les plateaux (5) sont amenés à une hauteur qui est légèrement supérieure à la hauteur de la table de préparation de commandes (8) et le cadre (12) du plateau est abaissé à une hauteur qui est légèrement inférieure à la hauteur de la plaque de fond (13) du plateau (5).

3. Procédé selon l'une quelconque des revendications précédentes, **caractérisé en ce que** la hauteur du support de charges (2) ou de la pile en formation sur le support de charges se trouve au-dessous du niveau de la table de préparation de commandes (8).

4. Procédé selon la revendication 3, **caractérisé en ce que** le niveau du support de charges (2) ou de la pile en formation sur le support de charges est maintenu constant au-dessous du niveau de la table de préparation de commandes (8) jusqu'à la fin du processus de chargement.

5. Procédé selon l'une quelconque des revendications précédentes, **caractérisé en ce que** la table de préparation de commandes se présente sous la forme d'un bac doté d'un bord circonférentiel élargi (10) et le support de charges (2) ou la pile en formation sur le support de charges est disposé à l'intérieur du bac.

6. Station de préparation manuelle de commandes (1) destinée au chargement d'un support de charges (2) avec des articles (3) ou des unités de chargement au moyen d'un dispositif de transport (4) destiné à amener des articles (3) à préparer se trouvant sur des plateaux (5), la station comportant un poste de préparation de commandes (6) qui est destiné à un préparateur de commandes (7), dont le rôle est de charger le support de charges (2) ou une pile en formation sur le support de charges, et qui comporte une table de préparation de commandes fixe (8) destinée à déplacer les articles (3) avant le chargement, le support de chargement (2) à charger étant disposé à côté ou au-dessous de la table de préparation de commandes (8),
**caractérisée en ce que**
la station de préparation de commandes (1) est conçue pour permettre d'amener les articles (3) se trouvant sur le plateau (5) à une hauteur telle que le préparateur de commandes (7) peut pousser ces articles du plateau (5) sur la table de préparation de commandes (8) sans avoir à les soulever manuellement afin de positionner ensuite les articles (3), sans les soulever, sur la table de préparation de commandes (8) ou la pile en formation sur le support de charges (2) et cette station de préparation de commandes comprend un dispositif d'abaissement qui est seulement destiné à abaisser un cadre (12) d'un plateau (5) sans déplacer verticalement une plaque de fond (15) du plateau (5).
